Europäisches Patentamt

European Patent Office (11) Publication number: 0 255 317

Office européen des brevets A1

(12) EUROPEAN PATENT APPLICATION

(21) Application number: 87306603.9

(51) Int. Cl.⁴: C08J 5/04 , B29C 67/14

(22) Date of filing: 27.07.87

(30) Priority: 31.07.86 GB 8618732

(43) Date of publication of application:
03.02.88 Bulletin 88/05

(84) Designated Contracting States:
AT BE CH DE ES FR GB GR IT LI LU NL SE

(71) Applicant: The Wiggins Teape Group Limited
P.O. Box 88 Gateway House Basing View
Basingstoke Hampshire RG21 2EE(GB)

(72) Inventor: Radvan, Bronislaw
24 The Meadows
Flackwell Heath Buckinghamshire(GB)
Inventor: Willis, Anthony John
16 Jerome Close
Marlow Buckinghamshire SL7 1TX(GB)
Inventor: Avakian, Roger W.
91, Frilinglei
B-2130 Brasschaat(BE)

(74) Representative: Bridge-Butler, Alan James et
al
G.F. REDFERN & CO. High Holborn House
52/54 High Holborn
London WC1V 6RL(GB)

(54) Method of making a fibre reinforced plastics structure and structures made according to the method.

(57) A method of making a fibre reinforced plastics structure which includes forming a drained porous web of reinforcing fibres and plastics material and impregnating the web with a silane coupling agent.

FIG.1

## METHOD OF MAKING A FIBRE REINFORCED PLASTICS STRUCTURE AND STRUCTURES MADE ACCORDING TO THE METHOD

This invention relates to a method of making a fibre reinforced plastics structure and to a fibrous structure made according to the method.

In the Applicants European Patent Application No. 85300031.3 (European Publication No. 0 148 760) a method is disclosed for forming a porous web by draining an aqueous foamed dispersion of reinforcing fibres and particulate plastics material on a foraminous support. The web can be used for moulding reinforced plastics articles, optionally with an intermediate consolidation step.

The web is formed from a foamed aqueous dispersion comprising discrete single glass fibres which confer particular benefits on the end product, especially in respect of its mouldability. However, the single glass fibres are derived from chopped strand bundles into which they were formed during manufacture and which also included coupling agents. The purpose of the coupling agents was to enhance the bonding of the fibres to the plastics material into which they would be incorporated and thus enhance the reinforcement they provided. It was however, found that in forming the aqueous dispersion of single fibres from fibre bundles, the coupling agents were necessarily washed off the fibres and lost from the web in drainage. In addition, where the coupling agent was a silane or substituted silane it tended to hydrolyse the aqueous system and thus cease to be available to function as a coupling agent in any event.

The present invention is intended to overcome this disadvantage in these processes and in other similar processes.

According to the present invention a method of making a fibre reinforced plastics structure includes forming a drained porous web of reinforcing fibres and plastics material and impregnating the web with a silane coupling agent.

This method takes advantage of the large surface area of the reinforcing fibres exposed within the porous mat for contact with the silane coupling agent after the mat has been drained, and preferably dried, so that little or no water is present.

One method includes drying or drying and partly consolidating the web prior to silane impregnation, and then drying further. Yet another method includes consolidating the web, heating to cause the web to expand to become porous and impregnating the web with the silane coupling agent.

The invention can be carried out in many ways and some embodiments will now be described by way of example and with reference to the accompanying drawings in which:

Figure 1 is a diagrammatic drawing of a method for impregnating a drained web with a silane coupling agent before drying;

Figure 2 is a diagrammatic drawing of a method for impregnating a dry or partly consolidated web with a silane coupling agent; and,

Figure 3 is a diagrammatic drawing of a method for impregnating, with a silane coupling agent, a web which has been consolidated and re-expanded.

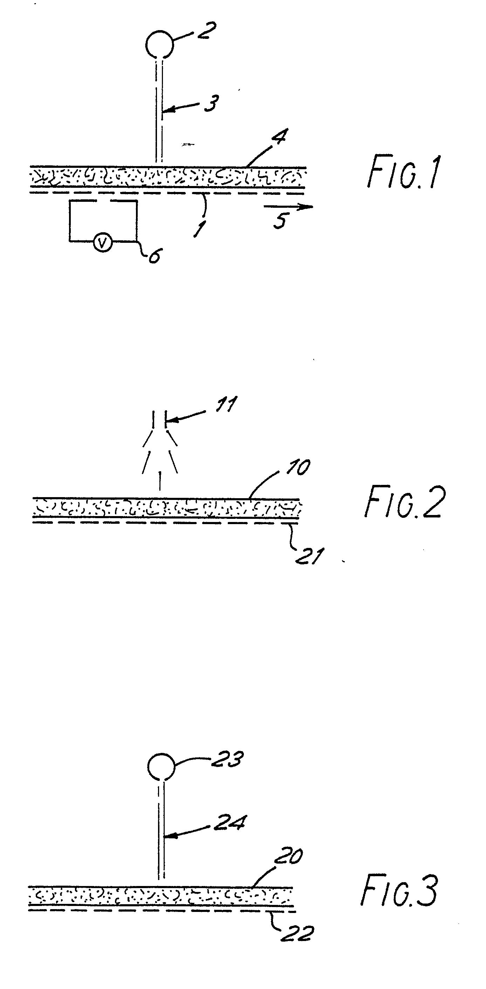

A method shown in Figure 1 can be used for impregnating a drained porous web with a silane coupling agent in the course of the process described in European Patent Application No. 85300031.3 (European Publication No. 0 148 760) the disclosure of which Application is hereby incorporated by reference herein. In this process a web is produced on a Fourdrinier wire, the web being formed of unbonded glass fibres interspersed with polyproylene particles. After drainage the web is transferred to a wire mesh belt indicated by reference numeral 1 in Figure 1. A curtain coater 2 of known design is employed to apply a curtain 3 of a silane coupling agent to the upper side of the web 4. The direction and movement of the belt 1 is indicated by arrow 5. A vacuum box 6 is provided beneath the belt 1 upstream of the curtain coater to provide a drop in pressure within the web 4 to assist penetration and impregnation of the web by the silane solution.

The web 4 can now continue, for example in the manner shown in European Patent Application No. 85300031.3 (European Publication No. 0 148 760), into a suitable dryer.

In the process shown in Figure 2, the method and apparatus of European Patent Application No. 85300031.3 (European Publication No. 0 148 760) is again employed but in this case the silane coupling agent is applied to a dry mat after the mat has passed through a drying process. As shown in Figure 2 a dry web 10 which has been carried on an endless travelling band 21 through a drying tunnel (not shown) passes beneath a spray or sprays 11 whereby a silane coupling agent is applied.

Figure 3 shows an arrangement which can be used for applying a silane coupling agent to the method described in European Patent Application No. 85300034.7 (European Publication No. 0 148 763) the disclosure of which Application is hereby incorporated by reference herein. In this European Patent Application a process of forming a sheet of fibre reinforced plastics material is described in which the material is first consolidated and then heated to cause it to re-expand into a porous condition due to the resilient characteristics of the reinforcing fibres. As shown in Figure 3 a sheet of re-expanded material on a belt 22 beneath a curtain coater 23 from which a silane coupling agent is applied to the material.

A number of silane coupling agents have been found to be capable of use in the process of the invention for surface modification of glass fibres and can be generally described by the structure

Rn SiX (4 -n)

where X is a hydrolysable group, typically a halogen, alkoxy, acyloxy or amino group. However, chloro silanes, although capable of reacting directly without prior hydrolysis, are generally not used due to the evolution of HCl corrosive to manufacturing plant.

R is generally chosen such that the functionality present is appropriate to the polymeric content of the web being treated, for example

amino    polyamides
epoxy    polyester, polycarbonates
vinyl    polypropylene, thermoset polyesters
mercapto    polysulphides

Examples of silane coupling agents which can enhance the glass fibre to polymer bonding in a consolidated reinforced plastics sheet include

3-Glycidoxypropyltrimethoxysilane

$$OCH_2CHCH_2O(CH_2)_3Si(OCH_3)_3$$

| | |
|---|---|
| Methyltrichlorosilane, | $CH_3SiCl_3$ |
| Propyltrichlorosilane, | $CH_3SiCl_3$ |
| Octyltrichlorosilane, | $C_8H_{17}SiCl_3$ |
| Dodecyltrichlorosilane, | $C_{12}H_{28}SiCl_3$ |
| Octadecyltrichlorosilane, | $C_{16}H_{37}SiCl_3$ |
| Phenyltrichlorosilane, | $C_5H_5SiCl_3$ |
| para-Tolytrichlorosilane, | $CH_3C_6H_4SiCl_3$ |
| 3 Chloropropyltrichlorosilane, | $ClC_2H_6SiCl_3$ |
| Methyldichlorosilane, | $CH_3SiCl_2$ |
| Dimethyldichlorosilane, | $(CH_3)_2SiCl_2$ |
| Octylmethyldichlorosilane, | $C_8H_{17}(CH_3)SiCl_3$ |

In addition systems involving methyltrimethoxysilane and propyltrimethoxysilane can also be used. Typically the solvent used is 1,1,1,-trichlorethane.

Other suitable silane coupling agents with appropriate functionality on the R substituent can be found in the literature, for example B. Arkles - "Tailoring Surfaces with Silanes" Chemtech 7, page 766 (1977) and E.P. Plueddemann - "Adhesion through silane coupling agents" - Journal of Adhesion 2, page 184 (1970).

Example

Using the process of European Patent Application No. 85300031.3 (European Publication No. 0 148 760) an unconsolidated dry web was prepared having a substance of 2000 grams per square metre, containing approximately 30% by weight of glass fibres 12 millimetres long 11 microns diameter with the balance being polybutylene terephthalate, a thermoplastic sold under the trade name VALOX 325 by G.E. Plastics Inc.

Rectangular samples of the dry web were cut in both machine and cross directions of the web so as to have an average size of 63 millimetres $\times$ 1.4 millimetres $\times$ 12.8 millimetres. The samples were dipped for 2 minutes to approximately half of their length in a freshly prepared silane solution formulated as follows and stirred for 5 minutes before use:-

5 millilitres of 3-glycidoxypropyltrimethoxysilane
2 millilitres of acetic acid
50 millilitres of water
500 millilitres of methyl alcohol.

The samples were then dried overnight at room temperature. By dipping only one half of each sample, treated and untreated portions were obtained and variations due to drying and moulding conditions avoided.

The samples were then heated to 120°C for 2 hours and compression pressed using a press temperature of 260°C, and then cooled whilst under pressure. The cooled samples were then tested for various physical properties with the results being set out in the Table below.

The data dictates that the silane treatment generally improves the tensile strength of the consolidated sheet and also affords an average increase in the tensile modulus

| | | Machine Direction untreated | Cross Direction untreated | Machine Direction silane treated | Cross Direction silane treated |
|---|---|---|---|---|---|
| Tensile strength | MPa | 131.9 | 75.9 | 139.5 | 82.6 |
| Tensile modulus | MPa | 7714 | 4329 | 10550 | 4255 |
| Elongation | % | 1.72 | 2.10 | 1.51 | 2.30 |
| Flexural strength | MPa | 166.6 | 114.8 | 173.5 | 107.7 |
| Flexural modulus | MPa | 6160 | 5110 | 6507 | 3980 |
| Fuse Box Impact** | kJ/m$^2$ | 43.1 | 36.9 | 43.9 | 35.7 |
| Wt% Glass* | | 28.7 | 27.8 | 29.5 | 29.2 |

\* Glass Contents determined by ashing ground material at 800°C for 1 hr (air)

\*\* Similar to Charpy unnotched impact test (DIN 53 354)

## Claims

1. A method of making a fibre reinforced plastics structure which includes forming a drained porous web of reinforcing fibres and plastics material and impregnating the web with a silane coupling agent.

2. A method as claimed in claim 1 which includes drying or drying and partly consolidating the web prior to silane impregnation, and then drying further.

3. A method as claimed in claim 1 which includes consolidating the web, heating to cause the web to expand and become porous and impregnating the web with the silane coupling agent.

4. A method of making a fibre reinforced plastics structure as set forth in the accompanying Example.

5. A method of making a fibre reinforced plastics structure substantially as described herein with reference to and as shown in Figure 1, Figure 2, and Figure 3 of the accompanying drawings.

6. A fibre reinforced plastics structure made according to the process set forth in any one of the preceding claims.

7. A fibre reinforced plastics structure as claimed in claim 6 and substantially as described herein with reference to and as shown in Figure 1, Figure 2 and . Figure 3 of the accompanying drawings.

FIG.1

FIG.2

FIG.3

## DOCUMENTS CONSIDERED TO BE RELEVANT

EP 87306603.9

| Category | Citation of document with indication, where appropriate, of relevant passages | Relevant to claim | CLASSIFICATION OF THE APPLICATION (Int. Cl.4) |
|---|---|---|---|
| A | US - A - 3 062 242 (VANDERBILT)<br>* Claims *<br>-- | 1,6 | C 08 J 5/04<br>B 29 C 67/14 |
| A | US - A - 3 264 156 (VANDERBILT et al.)<br>* Claims; column 1, lines 40-65 *<br>-- | 1,6 | |
| D,A | EP - A2 - 0 148 760 (THE WIGGINS TEAPE GROUP LIMITED)<br>* Claims *<br>---- | 1,6 | |

| TECHNICAL FIELDS SEARCHED (Int. Cl.4) |
|---|
| C 08 J<br>B 29 C 67/00 |

The present search report has been drawn up for all claims

| Place of search | Date of completion of the search | Examiner |
|---|---|---|
| VIENNA | 03-11-1987 | WEIGERSTORFER |